(19) Europäisches Patentamt
European Patent Office
Office européen des brevets

(11) EP 4 382 664 A1

(12) **EUROPEAN PATENT APPLICATION**

(43) Date of publication:
**12.06.2024 Bulletin 2024/24**

(21) Application number: **23194597.3**

(22) Date of filing: **31.08.2023**

(51) International Patent Classification (IPC):
***D21H 17/37*** *(2006.01)* ***D21H 19/20*** *(2006.01)*
***D21H 19/58*** *(2006.01)* ***C09D 123/04*** *(2006.01)*
***C09D 133/02*** *(2006.01)*

(52) Cooperative Patent Classification (CPC):
**C09D 123/0869; D21H 17/37; D21H 19/20; D21H 19/58**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.12.2022 KR 20220169048**

(71) Applicants:
- **SK Innovation Co., Ltd.**
  **Seoul 03188 (KR)**
- **SK Geo Centric Co., Ltd.**
  **Seoul 03188 (KR)**

(72) Inventors:
- **WOO, Dong Hyun**
  **34124 Daejeon (KR)**
- **SON, Sang Ha**
  **34124 Daejeon (KR)**
- **CHOI, Ji Hyeon**
  **34124 Daejeon (KR)**
- **HWANG, Bu Yeon**
  **34124 Daejeon (KR)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

# (54) COMPOSITION FOR COATING A PAPER, METHOD FOR PRODUCTION THEREOF AND COATED PAPER

(57) A composition for coating a paper according to embodiments of the present invention includes an ethylene-(meth)acrylic acid copolymer and a polycarbodiimide-based curing agent. By applying the paper coating composition to a paper and then drying the same, a coated paper with improved water resistance can be provided.

EP 4 382 664 A1

## Description

[BACKGROUND OF THE INVENTION]

1. Field of the Invention

The present invention relates to a composition for coating a paper, a method for production thereof and a coated paper. More particularly, the present invention relates to a paper coating composition including a copolymer and a curing agent, a method for production thereof and a coated paper.

2. Description of the Related Art

Generally, paper food containers include paper pots, paper cups, chicken boxes, cup noodles container and the like. In this regard, in order to solve a durability problem of the paper container due to moisture or oil content of food, the paper is given with water resistance, oil resistance, etc.

Specifically, paper food containers such as paper cups should have water resistance because they basically serve to contain water or beverages. For this reason, paper coated with synthetic resin, in particular, commonly used resin such as PE (LDPE, HDPE) and PP, PVC, urethane resin, etc. has been used to manufacture paper food containers such as paper cups or the like.

For example, Korean Patent Laid-Open Publication No. 10-2014-0115234 discloses a method for manufacturing a paper cup by applying a coating containing ethylene-(meth)acrylic acid copolymer to the surface of a paper. However, such coated paper lacks water resistance somewhat and the manufactured paper cup is less durable.

For the ethylene-(meth)acrylic acid copolymer having a low content of (meth)acrylic acid, due to cross-linking between carboxylic acids, a polarity of the copolymer is considerably reduced hence to cause a problem of greatly deteriorating adhesion properties to a polar substrate of a coating layer.

[SUMMARY OF THE INVENTION]

An object of the present invention is to provide a composition for coating a paper with improved water resistance, a method for production thereof and a coated paper.

To achieve the above objects, according to an aspect of the present invention, there is provided a composition for coating a paper including: a solvent; an ethylene-(meth) acrylic acid copolymer; a basic compound; and a polycarbodiimide-based curing agent, wherein an equivalent of carbodiimide group of the curing agent ranges from 150 to 350, and the equivalent refers to a weight (g) of the curing agent based on 1 mol of carbodiimide group.

According to exemplary examples, the equivalent of carbodiimide group of the polycarbodiimide-based curing agent may range from 200 to 330.

According to exemplary examples, a content of the polycarbodiimide-based curing agent may be more than 0 and 3% by weight or less based on a total weight of the composition.

According to exemplary examples, a content of the polycarbodiimide-based curing agent may range from 0.2% to 1.2% by weight based on a total weight of the composition.

According to exemplary examples, the ethylene-(meth)acrylic acid copolymer may include 10% to 30% by weight of (meth)acrylic acid-derived repeat units and 70% to 90% by weight of ethylene-derived repeat units.

According to exemplary examples, the ethylene-(meth)acrylic acid copolymer may have a weight average molecular weight ($M_w$) of 10,000 to 60,000. The molecular weight may be measured, for example, by light scattering detection. For example, gel-permeation chromatography or size exclusion chromatography may be used.

According to exemplary examples, a content of the ethylene-(meth)acrylic acid copolymer may range from 10% to 30% by weight based on a total weight of the composition.

According to exemplary examples, the basic compound may include at least one selected from the group consisting of ammonium hydroxide ($NH_4OH$), lithium hydroxide (LiOH), sodium hydroxide (NaOH), potassium hydroxide (KOH), cesium hydroxide (CsOH) and organic amine compounds.

According to exemplary examples, a content of the basic compound may range from 0.1% to 5% by weight based on a total weight of the composition.

According to exemplary examples, the solvent may include water.

In addition, according to another aspect of the present invention, there is provided a method for production of the composition for coating a paper, including: preparing a mixed solution which includes an ethylene-(meth)acrylic acid copolymer, a basic compound and a solvent; and adding a polycarbodiimide-based curing agent, in which a equivalent of carbodiimide group ranges from 150 to 350, to the mixed solution.

According to exemplary examples, the step of preparing a mixed solution may include agitating the mixed

solution at a temperature of 100 °C to 150 °C.

According to exemplary examples, the polycarbodiimide-based curing agent may be added to reach a content of more than 0 and 3% by weight or less based on a total weight of the composition.

Further, according to another aspect of the present invention, there is provided a coated paper, including: a base paper; and a coating layer formed on at least one surface of the base paper, wherein the coating layer is formed by coating the base paper with the composition for coating a paper which includes a solvent, an ethylene-(meth)acrylic acid copolymer, a basic compound and a polycarbodiimide-based curing agent, in which a equivalent of carbodiimide group ranges from 150 to 350.

According to exemplary examples, the coating layer may have a thickness of 5 to 30 um.

The composition for coating a paper according to exemplary embodiments of the present invention may include a polycarbodiimide-based curing agent thus to implement a coated paper with improved water resistance. For example, when a composition for coating a paper including a polycarbodiimide-based curing agent is applied to a base paper, a coating layer with smoother outer surface and less water permeation can be formed.

Therefore, when a paper packaging container such as a paper cup is manufactured using a coated paper with improved water resistance, durability may be retained or not be significantly reduced even if used for a long time.

Further, it is possible to improve adhesiveness of the composition for coating a paper to a polar substrate. Specifically, introduction of the polycarbodiimide-based curing agent may more prevent reduction of polarity, as compared to cross-linking by a polymerization reaction between (meth)acrylic acid-derived repeating units in an ethylene-(meth)acrylic acid copolymer.

Accordingly, even when the composition for coating a paper is applied to a base paper and then cured, the polarity is not considerably reduced so as to improve adhesiveness to a polar substrate, for example, a paper.

[BRIEF DESCRIPTION OF THE DRAWINGS]

The above and other objects, features and other advantages of the present invention will be more clearly understood from the following detailed description taken in conjunction with the accompanying drawings, in which:

FIG. 1 is a schematic cross-sectional view illustrating a coated paper according to an exemplary embodiment of the present invention;
FIG. 2 is a graph illustrating peel-off forces at a peel-off angle of 180° according to contents of curing agents in Examples 1-1 to 1-3 and Comparative Examples 1-1 to 1-3;
FIG. 3 is a graph illustrating peel-off forces at a peel-off angle of 180° according to contents of curing agents in Examples 2-1 to 2-3 and Comparative Examples 2-1 to 2-3, and
FIG. 4 is a schematic illustration of a peel-off force at a peel of angle of 180°.

[DETAILED DESCRIPTION OF THE INVENTION]

Exemplary embodiments of the present invention provide a composition for coating a paper("paper coating composition") which includes a solvent, an ethylene-(meth)acrylic acid copolymer, a basic compound, and a polycarbodiimide-based curing agent, in which a carbodiimide group equivalent ("carbodiimide group equivalent") ranges from 150 to 350, as well as a method for production thereof. Further, a coated paper with improved water resistance may be provided by using the composition for coating a paper.

Exemplary embodiments of the present invention provide a coated paper.

The term "(meth)acrylic acid" used herein may encompass acrylic acid and methacrylic acid.

The paper coating composition according to exemplary examples may include a polycarbodiimide-based curing agent.

The polycarbodiimide-based curing agent may have two or more carbodiimide groups, and may react with a carboxyl group of the ethylene-(meth)acrylic acid copolymer according to Scheme 1 below to form a N-acylurea bond, thereby cross-linking the copolymer. Such cross-linking between ethylene-(meth)acrylic acid copolymers may result in formation of a coating layer with excellent water resistance.

[Scheme 1]

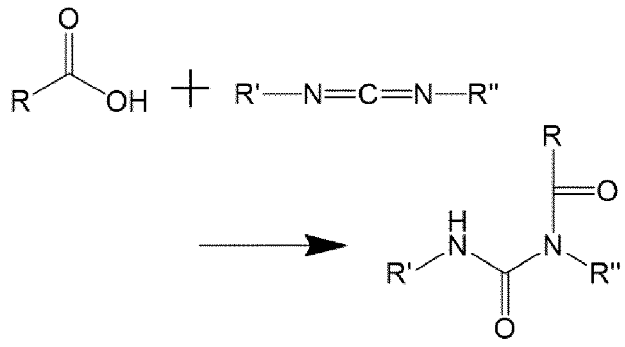

The carbodiimide group (-N=C=N-) of the polycarbodiimide-based curing agent may have an equivalent of 150 to 350.

The equivalent may refer to a weight (g) of the curing agent based on 1 mol of carbodiimide group. For example, if the polycarbodiimide-based curing agent includes 10 carbodiimide groups per molecule and has a molecular weight of 3000 g/mol, the equivalent of carbodiimide group in the curing agent may be 300. That is, as the curing agent contains more carbodiimide groups, the equivalent of the carbodiimide groups may be decreased.

In some embodiments, the carbodiimide group equivalent of the polycarbodiimide-based curing agent may range from 200 to 330, 200 to 320, 250 to 320, 260 to 320, 280 to 320, or 300 to 310. When the carbodiimide group equivalent of the polycarbodiimide-based curing agent is within the above range, a coating layer with improved adhesion to a polar substrate and water resistance may be implemented.

When the carbodiimide group equivalent of the polycarbodiimide-based curing agent is more than 350, adhesion to a polar substrate of the coating layer may be excessively deteriorated. Further, when the above agent is applied to a base paper, it lacks water resistance, hence causing reduction of durability of packaging container such as a paper cup.

When the carbodiimide group equivalent of the polycarbodiimide-based curing agent is less than 150, it lacks carbodiimide groups capable of reacting with carboxyl groups of the ethylene-(meth)acrylic acid copolymer, and due to this, a coating layer may not be formed and/or the coating layer itself may have inferior mechanical properties.

The polycarbodiimide-based curing agent may be an aqueous polycarbodiimide-based curing agent. The term "aqueous" used herein means water-soluble and water-dispersible property.

The aqueous polycarbodiimide-based curing agent may be a water-soluble polycarbodiimide-based curing agent or a water-dispersible polycarbodiimide-based curing agent.

The polycarbodiimide-based curing agent may be a polycarbodiimide compound or polycarbodiimide polymer.

The polycarbodiimide compound may contain two or more carbodiimide groups in a molecule. The polycarbodiimide polymer may include a carbodiimide group-containing compound and a polymer thereof, or a copolymer of the same with a monomer that can be copolymerized with the same.

For example, the carbodiimide group-containing compound may include p-phenylene-bis(2,6-xylyl carbodiimide), tetramethylene-bis(t-butyl carbodiimide), cyclohexane-1,4-bis(methylene-t-butyl carbodiimide), 1-vinyl-3-ethylcarbodiimide, 1-vinyl-3-propyl-carbodiimide, 1-vinyl-3-methoxypropyl-carbodiimide, 1-vinyl-3-isobutyl-carbodiimide, 1-prophenyl-3-ethyl-carbodiimide, 1-prophenyl-3-propyl-carbodiimide, 1-prophenyl-3-methoxypropyl-carbodiimide, 1-prophenyl-3-isobutyl-carbodiimide or the like. These compounds may be used alone or in combination of two or more thereof.

Co-polymerisable monomers for formation of polycarbodiimide may include, for example: aromatic vinyl monomers such as styrene, $\alpha$-methyl styrene, monochloro styrene, vinyltoluene, etc.; $\alpha$,$\beta$-ethylenic unsaturated monocarboxylic acid ester monomers such as methyl acrylate, methyl methacrylate, ethyl acrylate, butyl acrylate, etc., and the like.

According to exemplary embodiments, a content of the polycarbodiimide-based curing agent may be more than 0 and 3% by weight ("wt.%") or less based on a total weight of the composition. According to some embodiments, the content of the polycarbodiimide-based curing agent may range from 0.1 to 2.5 wt.% or from 0.5 to 1.5 wt.%. If the content of the above polycarbodiimide-based curing agent is within the above range, a coating layer prepared with the same may have smoothly formed surface, and a coated paper may have excellent water resistance thus to ensure low absorptivity.

Preferably, a content of the polycarbodiimide-based curing agent may range from 0.2 to 1.2 wt.%. When the content of the polycarbodiimide-based curing agent is within the above range, it is possible to further improve heat resistance and water resistance of a coated paper while preventing reduction of adhesion between the polar substrate and the coating layer.

The paper coating composition according to exemplary embodiments may include an ethylene-(meth)acrylic

acid copolymer.

The ethylene-(meth)acrylic acid copolymer may have acidic property due to a carboxyl group of (meth)acrylic acid-derived unit, and a polarity of the copolymer may vary depending upon the content of (meth)acrylic acid-derived unit.

According to exemplary embodiments, the ethylene-(meth)acrylic acid copolymer may include (meth)acrylic acid-derived repeat units in an amount of 10 to 30 wt.%. According to some embodiments, the ethylene-(meth)acrylic acid copolymer may include 12 to 25 wt.% of (meth) acrylic acid-derived repeat units.

If a content of the (meth)acrylic acid-derived repeat unit is within the above range, it may be dispersed well in the paper coating composition and may have improved compatibility with the polycarbodiimide-based curing agent. Further, as the ethylene-(meth)acrylic acid copolymer has high polarity, the paper coating composition may have excellent wettability to the polar substrate. Therefore, when a coating layer is formed using the above paper coating composition, the coating layer may have smooth surface to ensure improvement of physical properties.

According to exemplary embodiments, the ethylene-(meth) acrylic acid copolymer may include 70 to 90 wt.% of ethylene-derived repeat units. When the content of the ethylene-derived repeat unit is within the above range, water resistance of the coating layer may be ensured by coating a paper with the above composition to form a nonpolar molecular structure.

According to exemplary embodiments, the ethylene-(meth)acrylic acid copolymer may have a weight average molecular weight (Mw) of 10,000 to 60,000. According to some embodiments, the ethylene-(meth)acrylic acid copolymer may have a weight average molecular weight (Mw) of 10,000 to 40,000 or 20,000 to 40,000.

For example, the ethylene-(meth)acrylic acid copolymer may include two or more ethylene-(meth)acrylic acid copolymers having different weight average molecular weights. For example, the ethylene-(meth)acrylic acid copolymer may include a first ethylene-(meth)acrylic acid copolymer having a weight average molecular weight of 15,000 to 25,000, as well as a second ethylene-(meth)acrylic acid copolymer having a weight average molecular weight of more than 25,000 and 35,000 or less.

In some embodiments, the ethylene-(meth)acrylic acid copolymer may have a polydispersity index of 2 to 5, or 2.5 to 4.

According to exemplary embodiments, a content of the ethylene-(meth)acrylic acid copolymer may range from 10 to 30 wt.% based on the total weight of the composition. In some embodiments, the content of the ethylene-(meth)acrylic acid copolymer may range from 15 to 25 wt.% or 18 to 23 wt.% based on the total weight of the composition.

When the content of the ethylene-(meth)acrylic acid copolymer is within the above range, a viscosity of the paper coating composition may be suitably adjusted thus to form a coating layer with a sufficient thickness on the paper.

In some embodiments, a melting temperature (Tm) of the ethylene-(meth)acrylic acid copolymer may range from 50 to 100 °C. Thus, the paper coating composition including the ethylene-(meth)acrylic acid copolymer may form a coating layer at a relatively low temperature (e.g., room temperature). In some embodiments, the melting temperature may range from 60 to 85 °C, or 70 to 80 °C.

The paper coating composition according to exemplary embodiments may include a basic compound. The basic compound may neutralize carboxyl groups of (meth)acrylic acid-derived units included in the ethylene-(meth)acrylic acid copolymer.

According to exemplary embodiments, the basic compound may include at least one selected from the group consisting of ammonium hydroxide ($NH_4OH$), lithium hydroxide (LiOH), sodium hydroxide (NaOH), potassium hydroxide (KOH), cesium hydroxide (CsOH) and organic amine compounds.

In the case of ammonium hydroxide, it may be in the form of ammonia water.

The basic compound may conduct acid-base neutralization reaction with the carboxyl group of the (meth)acrylic acid-derived unit in the ethylene-(meth)acrylic acid copolymer. In this case, the ethylene-(meth)acrylic acid copolymer may have increased dispersibility.

According to exemplary embodiments, a content of the basic compound may range from 0.1 to 5 wt.% based on the total weight of the composition. In some embodiments, the content of the basic compound may range from 0.1 to 3 wt.%, or 0.2 to 2 wt.% based on the total weight of the composition.

When the content of the basic compound is within the above range, a neutralization reaction of carboxyl groups may be sufficiently performed to ensure the dispersibility of the ethylene-(meth)acrylic acid copolymer, while enabling the coating composition to have a desirable level of viscosity.

According to exemplary embodiments, the content of the basic compound may be determined in consideration of the content of the (meth)acrylic acid-derived unit in the ethylene-(meth)acrylic acid copolymer. For example, if the content of the (meth)acrylic acid-derived unit in the ethylene-(meth)acrylic acid copolymer is higher, a larger amount of basic compound may be used.

The paper coating composition according to exemplary embodiments may further include a solvent. The solvent may function as a solvent and/or dispersion medium for the ethylene-(meth)acrylic acid copolymer, basic compound and polycarbodiimide-based curing agent.

The solvent may include water. In some embodiments, the water may include pure water or deionized water.

According to exemplary embodiments, the solvent may be included as a balance to a sum of contents of the ethylene-(meth)acrylic acid copolymer, the basic compound and the polycarbodiimide-based curing agent in the paper coating composition.

A solid content of the paper coating composition may range from 5 to 40 wt.% based on the total weight of the composition. In some embodiments, the solid content of the paper coating composition may range from 10 to 40 wt.%, or 20 to 30 wt.% based on the total weight of the composition.

With regard to the paper coating composition, the balance except for the above solid content may be a content of water.

When having the solid content within the above range, the coating composition may have an appropriate level of viscosity. Further, when a coating layer is formed on the paper, the surface of the paper may be smooth and the coating may have improved physical properties.

According to an embodiment, the paper coating composition may not include any additional component other than the ethylene-(meth)acrylic acid copolymer, the basic compound, the polycarbodiimide-based curing agent and the solvent as the balance.

The paper coating composition may not include an organic solvent. Thus, the paper coating composition may form a coating layer by evaporating the solvent, for example, water only, whereby the coated paper may be manufactured by a simple process.

According to exemplary embodiments, a viscosity of the paper coating composition may be 1,000 cP or less at room temperature. Therefore, the paper coating composition may be uniformly applied to even a surface of paper having uneven portions. In some embodiments, the viscosity may range from about 300 to 700 cP, or 400 to 500 cP. Viscosity may be measured, for example, by a rotational viscometer.

According to exemplary embodiments, there is provided a method for production of a paper coating composition, including: preparing a mixed solution which includes an ethylene-(meth)acrylic acid copolymer, a basic compound and a solvent; and adding a polycarbodiimide-based curing agent, in which a carbodiimide group equivalent ranges from 150 to 350, to the mixed solution.

According to exemplary embodiments, the mixed solution including an ethylene-(meth)acrylic acid copolymer, a basic compound and a solvent may be firstly prepared.

Details regarding the ethylene-(meth)acrylic acid copolymer, the basic compound and the solvent may be the same as previously described above, unless stated otherwise.

The ethylene-(meth)acrylic acid copolymer may be used in the form of solid content rather than a separate dispersion, while the basic compound may be used in the form of an aqueous solution.

According to exemplary embodiments, a mixed solution including the ethylene-(meth)acrylic acid copolymer, the basic compound and the solvent may be prepared.

A content of the solvent included in the mixed solution may be a total sum of an amount of the solvent contained in an aqueous basic compound solution, and an amount of separately added solvent.

The content of the ethylene-(meth)acrylic acid copolymer may range from 10 to 30 wt.% based on a total weight of the mixed solution. When the content of the ethylene-(meth)acrylic acid copolymer is within the above range, a viscosity of the paper coating composition may be suitably adjusted and thus a coating layer may be formed with a sufficient thickness on the paper.

A content of the basic compound may range from 0.1 to 5 wt.% based on the total weight of the mixed solution. When the content of the basic compound is within the above range, a neutralization reaction of carboxyl groups may be sufficiently performed thus to ensure desired dispersibility of the ethylene-(meth)acrylic acid copolymer, while enabling a coating composition to have an appropriate level of viscosity.

A use amount of the basic compound solution may vary depending upon a content of acrylic acid in the ethylene-(meth)acrylic acid copolymer, types of the basic compound and a concentration of the basic compound.

For example, the basic compound solution may be used in an amount of 5 to 30 parts by weight ("wt. parts") based on 100 wt. parts of the ethylene-(meth)acrylic acid copolymer.

The mixed solution may be prepared by introducing an ethylene-(meth)acrylic acid copolymer in a solid phase to the basic compound solution and then dispersing the same.

According to exemplary embodiments, a process of preparing the mixed solution may include agitation at a temperature of 100 to 150 °C. In this case, a neutralization reaction between the ethylene-(meth)acrylic acid copolymer and the basic compound may be accelerated, and at least partially neutralized ethylene-(meth)acrylic acid copolymer and un-neutralized ethylene-(meth)acrylic acid copolymer may be effectively dispersed in the solvent. In some embodiments, the mixing may be conducted at a temperature of 110 to 140 °C, or 110 to 120 °C.

According to exemplary embodiments, the agitation may be conducted at a rate of 200 to 1,000 rpm for 1 to 20 hours. In some embodiments, the agitation may be conducted at a rate of 300 to 500 rpm for 2 to 16 hours.

According to exemplary embodiments, a polycarbodiimide-based curing agent, in which a carbodiimide group equivalent ranges from 150 to 350, may be added to the mixed solution.

Details regarding the polycarbodiimide-based curing agent may be the same as previously described above, unless stated otherwise.

According to exemplary embodiments, the polycarbodiimide-based curing agent may be added to reach a content of more than 0 to 3 wt.% or less based on the total weight of the composition. According to some embodiments, the polycarbodiimide-based curing agent may be added to reach a content of 0.1 to 2.5 wt.%, or 0.5 to 1.5 wt.% based on the total weight of the composition.

When the content of the polycarbodiimide-based curing agent is within the above range, the surface of the prepared coating layer may become smooth, while the coated paper has excellent water resistance and thus low absorptivity.

According to some embodiments, the polycarbodiimide-based curing agent may be added to reach a content of 0.2 to 1.2 wt.%. When the content of the polycarbodiimide-based curing agent is within the above range, heat resistance and water resistance of the coated paper may be further enhanced while preventing adhesion between the polar substrate and the coating layer from being reduced.

The polycarbodiimide-based curing agent may be added in the form of water-dispersion to the mixed solution. In some embodiments, the polycarbodiimide-based curing agent may be added in the form of water dispersion having a solid content of 30 to 50 wt.% to the mixed solution.

A content of the solvent included in the paper coating composition may be a total sum of an amount of the solvent included in the basic compound solution, an amount of the solvent included in the polycarbodiimide-based curing agent water-dispersion, and an amount of separately added solvent.

FIG. 1 is a schematic cross-sectional view illustrating a coated paper according to an exemplary embodiment of the present invention.

A coated paper 100 according to exemplary embodiments may include a base paper 10 and a coating layer 20 formed on at least one surface of the base paper.

The coating layer may be formed by coating the base paper with a paper coating composition, which includes a solvent, an ethylene-(meth)acrylic acid copolymer, a basic compound, and a polycarbodiimide-based curing agent, in which a carbodiimide group equivalent ranges from 150 to 350.

According to exemplary embodiments, the paper coating composition is applied to the base paper, followed by drying the same thus to produce the coated paper.

According to exemplary embodiments, the coating layer may have a thickness of 5 to 30 $\mu$m. When the thickness of the coating layer is within the above range, water permeation to the base paper may be prevented. In some embodiments, the coating layer may have a thickness of 10 to 20 $\mu$m.

Hereinafter, with reference to specific experimental examples, examples of the present invention will be additionally described. However, the examples and comparative examples included in the experimental examples are provided for illustrative purpose only, but are not intended to limit the appended claims.

<u>Example 1-1</u>

To 2000 mL auto-clave device, 100 g of ethylene-acrylic acid copolymer, that is, PRIMACOR 5980i (content of acrylic acid: 20.5 wt.%), 15 g of ammonia water ($NH_4$: 15 wt.%) and 352.041 g of water were added, followed by agitating the mixture at a temperature of 110 °C and an agitation rate of 400 rpm for 2 hours, thereby preparing a mixed solution.

To the mixed solution, a polycarbodiimide-based curing agent, that is, 2.347 g of carbodilite E-05 of Nitshinbo Co. (water-dispersion having a carbodiimide group equivalent of 310 and a solid content of 40 wt.%) was added thus to produce a paper coating composition.

At this time, with regard to a total weight of the produced paper coating composition, a content of the copolymer was about 21.30 wt.%, a content of the basic compound was about 0.47 wt.%, a content of the curing agent was about 0.20 wt.%, and the balance was water (including water portions of the ammonia water and the curing agent water-dispersion).

<u>Example 1-2</u>

A paper coating composition was produced by the same procedure as in Example 1-1 except that, in the preparation of a mixed solution, 367.02 g of water was admixed and 7.340 g of the curing agent was added to the mixed solution.

At this time, with regard to a total weight of the produced paper coating composition, a content of the copolymer was about 20.43 wt.%, a content of the basic compound was about 0.46 wt.%, a content of the curing agent was about 0.60 wt.%, and the balance was water (including water portions of the ammonia water and the curing agent water-dispersion).

Example 1-3

A paper coating composition was produced by the same procedure as in Example 1-1 except that, in the preparation of a mixed solution, 392.046 g of water was admixed and 15.682 g of the curing agent was added to the mixed solution.

At this time, with regard to a total weight of the produced paper coating composition, a content of the copolymer was about 19.13 wt.%, a content of the basic compound was about 0.43 wt.%, a content of the curing agent was about 1.20 wt.%, and the balance was water (including water portions of the ammonia water and the curing agent water-dispersion).

**Example 2-1**

To 1500 mL auto-clave device, 100 g of ethylene-acrylic acid copolymer, that is, XUS 60758.10L of SK PRIMACOR Co. (Lab grade) (content of acrylic acid: 13.5 wt.%), 11.25 g of sodium hydroxide solution (NaOH: 11.25 wt.%) and 340.560 g of water were added, followed by agitating the mixture at a temperature of 110 °C and an agitation rate of 400 rpm for 2 hours, thereby preparing a mixed solution.

To the mixed solution, a polycarbodiimide-based curing agent, that is, 2.270 g of carbodilite E-05 of Nitshinbo Co. (water-dispersion having a carbodiimide group equivalent of 310 and a solid content of 40 wt.%) was added thus to produce a paper coating composition.

At this time, with regard to a total weight of the produced paper coating composition, a content of the copolymer was about 22.02 wt.%, a content of the basic compound was about 0.28 wt.%, a content of the curing agent was about 0.20 wt.%, and the balance was water (including water portions of the sodium hydroxide solution and the curing agent water-dispersion).

**Example 2-2**

A paper coating composition was produced by the same procedure as in Example 2-1 except that, in the preparation of a mixed solution, 355.053 g of water was admixed and 7.101 g of the curing agent was added to the mixed solution.

At this time, with regard to a total weight of the produced paper coating composition, a content of the copolymer was about 21.12 wt.%, a content of the basic compound was about 0.27 wt.%, a content of the curing agent was about 0.60 wt.%, and the balance was water (including water portions of the sodium hydroxide solution and the curing agent water-dispersion).

**Example 2-3**

A paper coating composition was produced by the same procedure as in Example 2-1 except that, in the preparation of a mixed solution, 379.260 g of water was admixed and 15.170 g of the curing agent was added to the mixed solution.

At this time, with regard to a total weight of the produced paper coating composition, a content of the copolymer was about 19.77 wt.%, a content of the basic compound was about 0.25 wt.%, a content of the curing agent was about 1.20 wt.%, and the balance was water (including water portion of the sodium hydroxide solution and the curing agent water-dispersion).

**Comparative Examples 1-1 to 1-3**

Each paper coating composition was produced by the same procedure as described in Examples 1-1 to 1-3, except that, as a curing agent, carbodilite V-02-L2 of Nitshinbo Co. (water-dispersion having a carbodiimide group equivalent of 385 and a solid content of 40 wt.%) was added.

**Comparative Examples 2-1 to 2-3**

Each paper coating composition was produced by the same procedure as described in Examples 2-1 to 2-3, except that, as a curing agent, carbodilite V-02-L2 of Nitshinbo Co. (water-dispersion having a carbodiimide group equivalent of 385 and a solid content of 40 wt.%) was added.

**Reference Example 1**

To 2000 mL auto-clave device, 100 g of ethylene-acrylic acid copolymer, that is, PRIMACOR 5980i (content of acrylic acid: 20.5 wt.%), 15 g of ammonia water ($NH_4$: 15 wt.%) and 345 g of water were added, followed by agitating the mixture at a temperature of 110 °C and an agitation rate of 400 rpm for 2 hours, thereby producing a paper coating composition.

At this time, with regard to a total weight of the produced paper coating composition, a content of the copolymer was about 21.74 wt.%, a content of the basic compound was about 0.49 wt.%, and the balance was water (including water portions of the ammonia water and the curing agent water-dispersion).

**Reference Example 2**

To 1500 mL of auto-clave device, 100 g of ethylene-acrylic acid copolymer, that is, XUS 60758.10L of SK PRIMACOR Co. (Lab grade) (content of acrylic acid: 13.5 wt.%), 11.25 g of sodium hydroxide solution (NaOH: 11.25 wt.%) and 333.75 g of water were added, followed by agitating the mixture at a temperature of 110 °C and an agitation rate of 400 rpm for 2 hours, thus to produce a paper coating composition.

At this time, with regard to a total weight of the produced paper coating composition, a content of the copolymer was about 22.47 wt.%, a content of the basic compound was about 0.28 wt.%, and the balance was water (including water portions of the sodium hydroxide solution and the curing agent water-dispersion).

The following Table 1 shows the summary of characteristics and contents of the coating components in the examples, comparative examples and reference examples.

[TABLE 1]

| Wt.% among total weight of compositi on | Basic compound | | EAA copolymer | | Curing agent | |
|---|---|---|---|---|---|---|
| | Type | Cont ent | Acrylic acid content (wt.%) | Content | -N=C=N- equivale nt | Conte nt |
| Example 1-1 | $NH_4$ | 0.47 | 20.5 | 21.30 | 310 | 0.2 |
| Example 1-2 | $NH_4$ | 0.46 | 20.5 | 20.43 | | 0.6 |
| Example 1-3 | $NH_4$ | 0.43 | 20.5 | 19.13 | | 1.2 |
| Comparati ve Example 1-1 | $NH_4$ | 0.47 | 20.5 | 21.30 | 385 | 0.2 |
| Comparati ve Example 1-2 | $NH_4$ | 0.46 | 20.5 | 20.43 | | 0.6 |
| Comparati ve Example 1-3 | $NH_4$ | 0.43 | 20.5 | 19.13 | | 1.2 |
| Reference Example 1 | $NH_4$ | 0.49 | 20.5 | 21.74 | - | 0 |
| Example 2-1 | NaOH | 0.28 | 13.5 | 22.02 | 310 | 0.2 |
| Example 2-2 | NaOH | 0.27 | 13.5 | 21.12 | | 0.6 |
| Example 2-3 | NaOH | 0.25 | 13.5 | 19.77 | | 1.2 |
| Comparati ve Example 2-1 | NaOH | 0.28 | 13.5 | 22.02 | 385 | 0.2 |
| Comparati ve Example 2-2 | NaOH | 0.27 | 13.5 | 21.12 | | 0.6 |
| Comparati ve Example 2-3 | NaOH | 0.25 | 13.5 | 19.77 | | 1.2 |
| Reference Example 2 | NaOH | 0.28 | 13.5 | 22.47 | - | 0 |

In Table 1 above, EAA copolymer means the ethylene-acrylic acid copolymer, the acrylic acid content is a value of the content of acrylic acid-derived repeat unit in unit of wt.% with reference to the whole of copolymer, and each content of the curing agent, basic compound and copolymer is a value in unit of wt.% with reference to the whole of paper coating composition.

**Experimental Example 1: Assessment of water resistance of coated paper**

The paper coating composition in each of the examples, comparative examples and reference examples was

applied to a base paper for a paper cup in order to form a coating layer with a thickness of 10 μm, followed by drying the same thus to produce a coated paper.

According to ISO-533, the base paper for a paper cup and the produced coated paper were subjected to assessment of water resistance. Specifically, each of the base paper for a paper cup and the coated paper was cut to have the same area of 100 $cm^2$ (0.01 $m^2$), followed by measuring a weight (g) in dried state. Further, each of the base paper for a paper cup and the coated paper was treated with water and then measured for a weight (g) in wet state according to ISO-533. An absorptivity was calculated from the measured weight by the following Equation 1, and results thereof are shown in Table 2 below.

[Equation 1]

$$\text{Absorptivity} = (\text{Wet weight} - \text{Dry weight})/\text{Specimen area}$$

**Experimental Example 2: Assessment of adhesiveness to polar substrate**

The paper coating composition in each of the examples, comparative examples and reference examples was applied to an aluminum (Al) substrate (thickness: 40 μm) in order to form a coating layer with a thickness of 10 μm, followed by drying the same thus to prepare a sample.

For the prepared sample, a peel-off force for the coating layer was measured at a peel-off rate of 20 mm/min and at room temperature by UTM (Universal Testing Machine, 5956) apparatus of INSTRON Co., and the measured results are shown in Table 2 below. A peel test setup with a peel force F at a peel-off angle of 180° is shown in FIG. 4.

Further, FIG. 2 shows a graph for peel-off forces (i.e., peel-off strength) at a peel-off angle of 180° according to contents of the curing agents in Examples 1-1 to 1-3 and Comparative Examples 1-1 to 1-3, while FIG. 3 shows a graph for peel-off forces at a peel-off angle of 180° according to contents of the curing agents in Examples 2-1 to 2-3 and Comparative Examples 2-1 to 2-3.

[TABLE 2]

| | Dry weight (g) | Wet weight (g) | Absorptivi ty (g/$m^2$) | Peel-off force at 180° (gf/in) |
|---|---|---|---|---|
| Example 1-1 | 3.64 | 3.66 | 2 | 1747 |
| Example 1-2 | 3.71 | 3.72 | 1 | 1811 |
| Example 1-3 | - | - | - | 1779 |
| Comparative Example 1-1 | 3.68 | 3.73 | 5 | 1501 |
| Comparative Example 1-2 | 3.72 | 3.76 | 4 | 1503 |
| Comparative Example 1-3 | - | - | - | 1523 |
| Reference Example1 | 3.58 | 3.66 | 4 | 1609 |
| Example 2-1 | 3.71 | 3.77 | 6 | 1294 |
| Example 2-2 | 3.75 | 3.77 | 2 | 1117 |
| Example 2-3 | - | - | - | 1084 |
| Comparative Example 2-1 | 3.63 | 3.73 | 10 | 1101 |
| Comparative Example 2-2 | 3.62 | 3.71 | 9 | 1092 |
| Comparative Example 2-3 | - | - | - | 945 |
| Reference Example2 | 3.62 | 3.82 | 20 | 1324 |
| Base paper | 3.5 | 4.22 | 77 | - |

Referring to Table 2, FIGS. 2 and 3, it can be confirmed that the coated papers according to the examples have low absorptivity and thus improved water resistance. Further, it can also be confirmed that the compositions according to the examples have peel-off force to a polar substrate, which is higher than or similar to those of the reference examples.

On the other hand, the comparative examples in which the carbodiimide curing agents having carbodiimide group equivalent of more than 350 were used, showed higher absorptivity than those in the examples and thus some

deterioration of water resistance. Further, it can be confirmed that the composition according to each of the comparative examples has lower peel-off force to a polar substrate than the examples, in which the same amount of curing agent was added, and the peel-off force is much less than those in the reference examples.

## Claims

1. A composition for coating a paper comprising:

   a solvent;
   an ethylene-(meth)acrylic acid copolymer;
   a basic compound; and
   a polycarbodiimide-based curing agent,
   wherein an equivalent of carbodiimide group of the curing agent ranges from 150 to 350, and
   the equivalent refers to a weight (g) of the curing agent based on 1 mol of carbodiimide group.

2. The composition for coating a paper according to claim 1, wherein the equivalent of carbodiimide group of the polycarbodiimide-based curing agent ranges from 200 to 330.

3. The composition for coating a paper according to claims 1 or 2, wherein a content of the polycarbodiimide-based curing agent is more than 0 and 3 wt.% or less based on a total weight of the composition.

4. The composition for coating a paper according to one of claims 1 to 3, wherein a content of the polycarbodiimide-based curing agent ranges from 0.2% to 1.2% by weight based on a total weight of the composition.

5. The composition for coating a paper according to one of claims 1 to 4, wherein the ethylene-(meth)acrylic acid copolymer includes 10% to 30% by weight of (meth)acrylic acid-derived repeat units and 70% to 90% by weight of ethylene-derived repeat units.

6. The composition for coating a paper according to one of claims 1 to 5, wherein the ethylene-(meth)acrylic acid copolymer has a weight average molecular weight ($M_w$) of 10,000 to 60,000.

7. The composition for coating a paper according to one of claims 1 to 6, wherein a content of the ethylene-(meth)acrylic acid copolymer ranges from 10% to 30% by weight based on a total weight of the composition.

8. The composition for coating a paper according to one of claims 1 to 7, wherein the basic compound includes at least one selected from the group consisting of ammonium hydroxide ($NH_4OH$), lithium hydroxide (LiOH), sodium hydroxide (NaOH), potassium hydroxide (KOH), cesium hydroxide (CsOH) and organic amine compounds.

9. The composition for coating a paper according to one of claims 1 to 8, wherein a content of the basic compound ranges from 0.1 to 5% by weight based on a total weight of the composition.

10. The composition for coating a paper according to one of claims 1 to 9, wherein the solvent includes water.

11. A method for production of the composition for coating a paper according to claim 1, comprising:

    preparing a mixed solution which comprises an ethylene-(meth)acrylic acid copolymer, a basic compound and a solvent; and
    adding a polycarbodiimide-based curing agent, in which a an equivalent of carbodiimide group ranges from 150 to 350, to the mixed solution,
    wherein the equivalent refers to a weight (g) of the curing agent based on 1 mol of carbodiimide group.

12. The method according to claim 11, wherein the step of preparing a mixed solution comprises agitating the mixed solution at a temperature of 100 °C to 150 °C.

13. The method according to one of claims 11 or 12, wherein the polycarbodiimide-based curing agent is added to reach a content of more than 0 and 3% by weight or less based on a total weight of the composition.

**14.** A coated paper, comprising:

a base paper (10); and
a coating layer (20) formed on at least one surface of the base paper,
wherein the coating layer is formed by coating the base paper with the composition for coating a paper according to claim 1, which comprises a solvent, an ethylene-(meth)acrylic acid copolymer, a basic compound and a polycarbodiimide-based curing agent, in which a carbodiimide group equivalent ranges from 150 to 350, and wherein the equivalent refers to a weight (g) of the curing agent based on 1 mol of carbodiimide group.

**15.** The coated paper according to claim 14, wherein the coating layer has a thickness of 5 μm to 30 μm.

[FIG. 1]

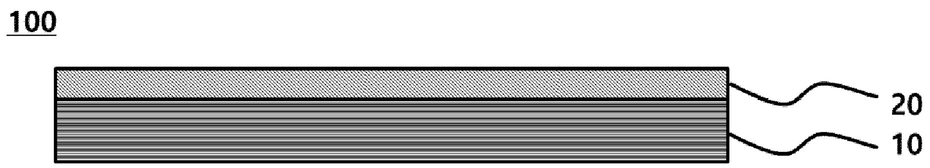
100
20
10

[FIG. 2]

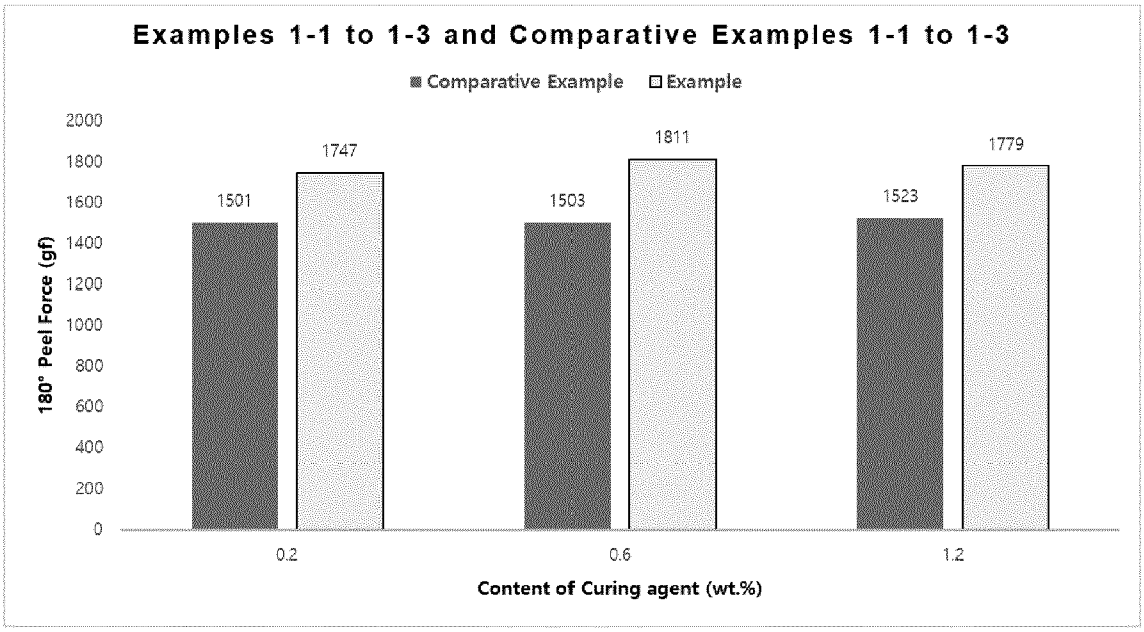
Examples 1-1 to 1-3 and Comparative Examples 1-1 to 1-3
Comparative Example
Example
180° Peel Force (gf)
2000
1800
1600
1400
1200
1000
800
600
400
200
0
1501
1747
1503
1811
1523
1779
0.2
0.6
1.2
Content of Curing agent (wt.%)

[FIG. 3]

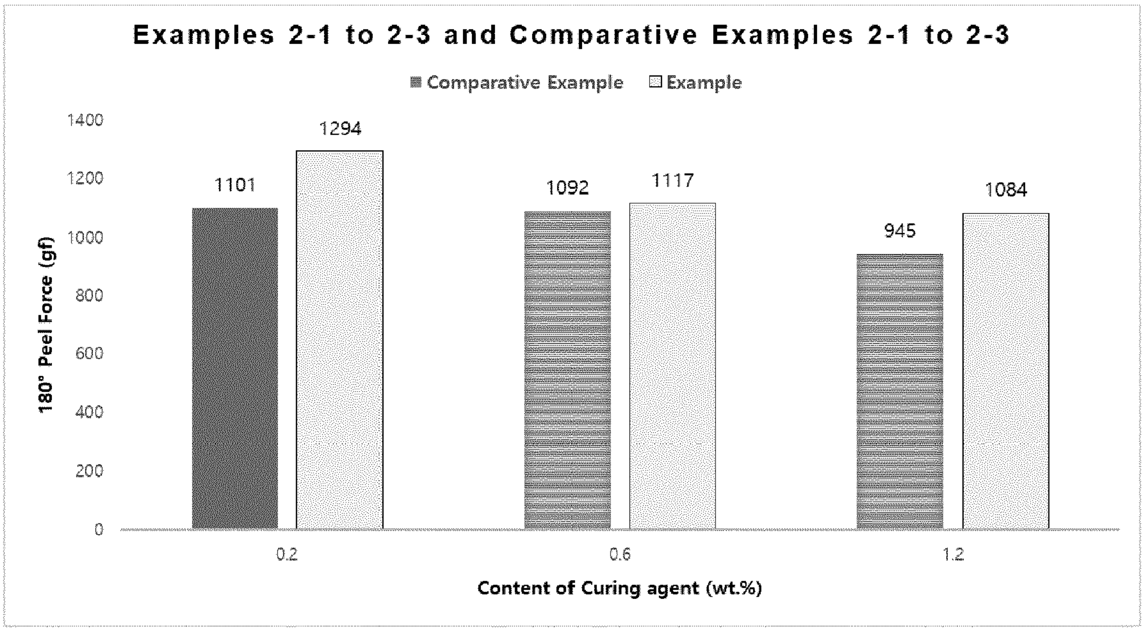
Examples 2-1 to 2-3 and Comparative Examples 2-1 to 2-3
Comparative Example
Example
180° Peel Force (gf)
1400
1200
1000
800
600
400
200
0
1101
1294
1092
1117
945
1084
0.2
0.6
1.2
Content of Curing agent (wt.%)

[FIG. 4]

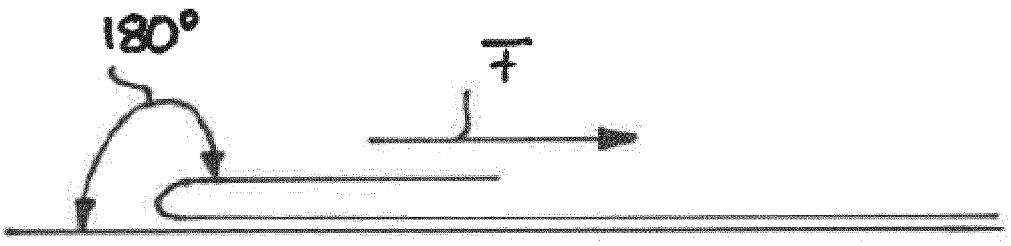
180°
F

Europäisches Patentamt
European Patent Office
Office européen des brevets

# EUROPEAN SEARCH REPORT

Application Number
EP 23 19 4597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/058402 A1 (MITSUI DU PONT POLYCHEMICAL [JP]) 25 April 2013 (2013-04-25) * page 19, paragraph 79 * * composition 1; page 39, paragraph 146 * * page 40, paragraph 149; table 3 * * claims 1,10,12 * ----- | 1-15 | INV. D21H17/37 D21H19/20 D21H19/58 C09D123/04 C09D133/02 |
| A | WO 2016/032754 A1 (COVESTRO LLC [US]; SUMIKA COVESTRO URETHANE CO LTD [JP]) 3 March 2016 (2016-03-03) * page 21, paragraph 69; claims 1,10,11,13 * ----- | 1-15 | |

TECHNICAL FIELDS SEARCHED (IPC)

D21H
C08F
C09D

The present search report has been drawn up for all claims

1

| Place of search | Date of completion of the search | Examiner |
|---|---|---|
| Munich | 1 March 2024 | Mill, Sibel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 19 4597

This annex lists the patent family members relating to the patent documents cited in the above-mentioned European search report. The members are as contained in the European Patent Office EDP file on
The European Patent Office is in no way liable for these particulars which are merely given for the purpose of information.

01-03-2024

| Patent document cited in search report | Publication date | Patent family member(s) | Publication date |
|---|---|---|---|
| WO 2013058402 A1 | 25-04-2013 | NONE | |
| WO 2016032754 A1 | 03-03-2016 | CA 2957558 A1 | 03-03-2016 |
| | | CN 106661363 A | 10-05-2017 |
| | | EP 3186291 A1 | 05-07-2017 |
| | | JP 6813476 B2 | 13-01-2021 |
| | | JP 2017529426 A | 05-10-2017 |
| | | KR 20170048352 A | 08-05-2017 |
| | | US 2016060478 A1 | 03-03-2016 |
| | | WO 2016032754 A1 | 03-03-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020140115234